(19) Europäisches Patentamt
European Patent Office
Office européen des brevets

(11) Veröffentlichungsnummer: **0 347 682 A2**

(12) **EUROPÄISCHE PATENTANMELDUNG**

(21) Anmeldenummer: **89110533.0**

(22) Anmeldetag: **10.06.89**

(51) Int. Cl.4: **C08G 63/62 , G11B 7/24**

(30) Priorität: **24.06.88 DE 3821340**

(43) Veröffentlichungstag der Anmeldung: **27.12.89 Patentblatt 89/52**

(84) Benannte Vertragsstaaten: **BE DE ES FR GB IT NL**

(71) Anmelder: **BAYER AG**
**D-5090 Leverkusen 1 Bayerwerk(DE)**

(72) Erfinder: **Dujardin, Ralf, Dr.**
**Bodelschwinghstrasse 18**
**D-4150 Krefeld(DE)**
Erfinder: **Pielartzik, Harald, Dr.**
**Doerperhofstrasse 39**
**D-4150 Krefeld(DE)**
Erfinder: **Dhein, Rolf, Dr.**
**Deswatinesstrasse 30**
**D-4150 Krefeld(DE)**

(54) **Polycarbonate mit mesogenen Verbindungen als Endgruppen, ihre Herstellung und Verwendung.**

(57) Gegenstand der vorliegenden Erfindung sind thermoplastische, aromatische Polycarbonate, in denen mesogene Verbindungen der Formel

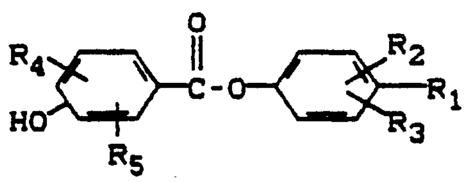

(I)

als Kettenabbrecher eingebaut sind, ihre Herstellung nach den bekannten Polycarbonatherstellungsverfahren sowie ihre Verwendung zur Herstellung von Formkörpern für optische Zwecke.

EP 0 347 682 A2

## Polycarbonate mit mesogenen Verbindungen als Endgruppen, ihre Herstellung und Verwendung

Gegenstand der vorliegenden Erfindung sind thermoplastische, aromatische Polycarbonate mit mittleren Molekulargewichten Mn (Zahlenmittel, ermittelt durch Gelchromatographie nach vorheriger Eichung) von mindestens 5.000 g/Mol, vorzugsweise von 7.500 g/Mol bis 100.000 g/Mol und insbesondere von 9.000 g/Mol bis 25.000 g/Mol auf Basis von Diphenolen, Kettenabbrechern und gegebenenfalls Verzweigern, die dadurch gekennzeichnet sind, daß als Kettenabbrecher mesogene Verbindungen der Formel (I) eingebaut sind,

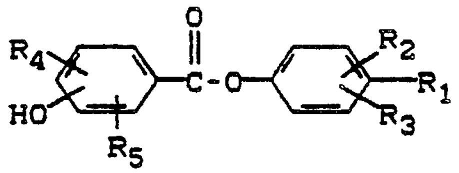

(I)

worin

$R_1$, $R_2$, $R_3$, $R_4$ und $R_5$ gleich oder verschieden sind und Wasserstoff, $C_1$-$C_{12}$-Alkyl, $C_1$-$C_{12}$-Alkyloxy, $C_3$-$C_{10}$-Cycloalkyl-, $C_3$-$C_{10}$-Cycloalkyloxy-, $C_6$-$C_{20}$-Aryl, $C_6$-$C_{20}$-Aryloxy, $C_7$-$C_{20}$-Aralkyl-, $C_7$-$C_{20}$-Aralkyloxy, Trifluormethyl, Trifluormethoxy, Chlor, Brom, Iod oder Nitro sind, wobei $R_2$, $R_3$, $R_4$ und $R_5$ vorzugsweise Wasserstoff sind.

Die erfindungsgemäß als Kettenabbrecher einzusetzenden mesogenen Verbindungen der Formel (I) sind entweder literaturbekannt oder entsprechend literaturbekannten Verfahren durch Veresterung von Phenolen mit Hydroxybenzoesäuren erhältlich (s. beispielsweise H. Pielartzik in Houben-Weyl, "Methoden der org. Chemie", Ergänzungsband E 5, Seiten 656 ff., Thieme Verlag 1984 oder S. A. Haut, D. C. Schroeder und J. P. Schroeder im Journal Organic Chemistry, Vol. 37, S. 1925, 1972).

Gegenstand der vorliegenden Erfindung ist außerdem die Verwendung der mesogenen Verbindungen der Formel (I) als Kettenabbrecher zur Herstellung von thermoplastischen, aromatischen Polycarbonaten.

Gegenstand der vorliegenden Erfindung ist außerdem die Herstellung von thermoplastischen, aromatischen Polycarbonaten mit Molekulargewichten $\overline{M}n$ (Zahlenmittel, gemessen wie eingangs dargelegt) von mindestens 5.000 g/Mol, vorzugsweise von 7.500 g/Mol bis 100.000 g/Mol und insbesondere von 9.000 g/Mol bis 25.000 g/Mol, nach dem bekannten Zweiphasengrenzflächenverfahren, nach dem bekannten Verfahren in homogener Lösung (den sogenannten Pyridinverfahren) oder nach dem bekannten Schmelzumesterungsverfahren durch Umsetzung von unter den Bedingungen dieser Polycarbonatsynthesen reaktiven Kohlensäurederivaten mit Diphenolen, Kettenabbrechern und gegebenenfalls mit Verzweigern, das dadurch gekennzeichnet ist, daß man als Kettenabbrecher mesogene Verbindungen der Formel (I) einsetzt.

Gegenstand der vorliegenden Erfindung sind außerdem die nach dem erfindungsgemäßen Verfahren erhältlichen thermoplastischen aromatischen Polycarbonate.

Die erfindungsgemäße Polycarbonate sind aufgrund ihres guten Eigenschaftsbildes, insbesondere aufgrund ihres guten Fließverhaltens, zur Herstellung von Formteilen mit hoher Maßgenauigkeit geeignet, wie sie insbesondere für optische Geräte, wie Datenspeicher oder Audio-Compact-Dics, notwendig sind.

Gegenstand der vorliegenden Erfindung ist somit außerdem die Verwendung der erfindungsgemäßen aromatischen thermoplastischen Polycarbonate zur Herstellung von Formkörpern für optische Zwecke, wie Datenspeicher oder Audio-Compact-Discs.

Kettenabbrecher der verschiedensten Art sind bereits für die Polycarbonatherstellung verwendet worden (siehe bei spielsweise (S-PS 3 085 992, US-PS 3 399 172, US-PS 3 028 365, US-PS 4 111 910, EP-OS 0 001 579, EP-OS 0 ßß6 579, US-PS 4 677 184, JP-OS 34992/76 und DE-OS 2 842 005). Am gebräuchlichsten sind Phenole und Alkylphenole.

Ein wichtiges Ziel bei der Auswahl von Kettenabbrechern für Polycarbonate ist das Verhältnis von Molekulargewicht und mechanischen Eigenschaften einerseits zu rheologischen Eigenschaften und Verarbeitbarkeit andererseits. Ist das Molekulargewicht niedrig, so sind zwar die rheologischen Eigenschaften und die Verarbeitbarkeit gut, aber häufig die mechanischen Eigenschaften des Polycarbonats nicht mehr optimal; ist das Molekulargewicht hoch, so sind zwar die mechanischen Eigenschaften günstig, aber die Verarbeitbarkeit schwieriger.

Die Verwendung der mesogenen Verbindungen der Formel (I) als Kettenabbrecher bewirkt nun überraschenderweise eine günstige Eigenschaftskombination bezüglich mechanischen Eigenschaften und

rheologischen Eigenschaften bei jeweils gegebenem Molekulargewicht.

Erfindungsgemäß geeignete mesogene Verbindungen der allgemeinen Formel (I) sind beispielsweise Ester aus p-Hydroxybenzoesäure bzw. m-Hydroxy-benzoesäure und Phenol, p-Kresol, 3,5-Dimethylphenol, p-Ethylphenol, p- Propylphenol, p-n-Butylphenol, p-Nonylphenol, p-Cyclohexylphenol, p-Phenylphenol, p-Trifluormethylphenol, 3,5-Bistrifluormethylphenol, p-Methoxyphenol, p-(4-Methoxyphenyl)-phenol, p-Chlorphenol, p-Fluorphenol und p-Nitrophenol.

Die Produkte werden nach üblichen Methoden (GC, $^1$H-NMR, IR) charakterisiert.

Der flüssigkristalline Zustand von Schmelzen läßt sich mit Hilfe eines Polarisationsmikroskops (Reichert, Thermovar) untersuchen: Für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Untersuchung der Produkte erfolgte nach dem Aufschmelzen der Proben bei Temperaturen zwischen 280 und 400° C. Sofern in diesem gesamten Bereich oder in einem Teil davon eineAufhellung der zwischen den gekreuzten Nicolschen Prismen beobachteten Schmelze auftrat, wurde das Produkt als thermotropflüssigkristallin eingestuft.

Die flüssigkristallinen Produkte zeigen in der Meßanordnung entweder im gescherten oder im ungescherten Zustand Werte über 1 Skalenteil, meist Werte von 3 bis 90 Skalenteilen. Für amorphe Schmelzen wurden dagegen Werte von weniger als 0,1 Skalenteilen gefunden.

Die oben beschriebene Methode ist für eine Schnellbestimmung im Laboratorium besonders geeignet und liefert in nahezu allen Fällen zweifelfreie Ergebnisse. In Zweifelfällen kann es dagegen sinnvoll sein, das Vorhandensein flüssigkristalliner Komponenten mittels Röntgenweitwinkelstreuung in der Schmelze nachzuweisen, wie es z.B. bei G.W. Gray und P.A. Windsor, "Plastic Crystals, Physico-Chemical Propertiens and Methods of Investigation", insb. Chapter 3, John Wiley and Sons, New York, Sydney, Toronto 1974, beschrieben ist.

Die Menge an mesogener bezeichnungsweise thermotropflüssigkristalliner Verbindung der Formel (I) als Kettenabbrecher zur Einstellung der Molekulargewichte $\overline{M}n$ zwischen 5000 g/Mol und 100 000 g/Mol beträgt in bekannter Weise zwischen 0,5 Mol-% und 10 Mol-%, vorzugsweise zwischen 2 Mol-% und 7 Mol-%, bezogen jeweils auf Mole an eingesetzten Diphenolen.

Bei der zusätzlichen Mitverwendung von Verzweigern, also von dreifunktionellen oder mehr als dreifunktionellen Verbindungen in den üblichen Mengen von 0,05 Mol-% bis 2 Mol-%, bezogen auf Mole Diphenole, beträgt die Menge an Kettenabbrecher der Formel (I) zwischen 0,5 Mol-% und 10 Mol-%, vorzugsweise zwischen 3 Mol-% und 6 Mol-%.

Die erfindungsgemäß einsetzbaren Diphenole können sowohl einkernig als auch mehrkernig sein, sie können zusätzlich Heteroatome enthalten und/oder zusätzlich substituiert sein, wobei Halogen und Alkyl, insbesondere Chlor, Brom, Methyl und Ethyl die bevorzugten Substituierten sind.

Erfindungsgemäß einsetzbare Diphenole sind vorzugsweise solche der Formel (II)

HO-Z-OH,

worin Z ein zweiwertiger, aromatischer Rest mit 6 bis 30 C-Atome ist, der unsubstituiert oder durch Halogen, beispielsweise Chlor oder Brom, oder durch Alkyl, beispielsweise Methyl oder Ethyl, substituiert sein kann.

Geeignete Diphenole sind
Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone,
$\alpha,\alpha'$-Bis- (hydroxyhenyl)-diisopropylbenzole und
$\alpha,\omega$-Bis-(hydroxyphenyl)-polysiloxane,
sowie deren kernalkylierte und kernhalogenierte Verbindungen. Diese und weitere geeignete Diphenole sind z.B. in den US-Patentschriften 3 028 365, 2 999 835, 3 148 172, 2 991 273, 3 271 367 und 2 999 846, in den deutschen Offenlegungsschriften 1 570 703, 2 063 050, 2 036 052, 2 211 956, der französischen

Patentschrift 1 561 518, der europäischen Offenlegungsschrift EP-O-122 535 und in der Monographie "H. Schnell, Chemistry and Physics f Polycarbonates, Interscience Publiers, New York, 1964" beschrieben.

Bevorzugte Diphenole sind beispielsweise
4,4′-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α′-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-Dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α′-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan und solche der Formel IIa

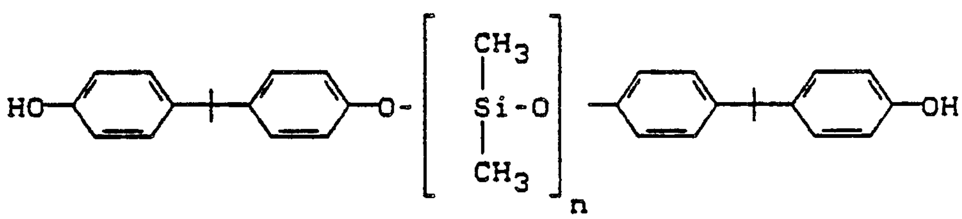

worin n = 40, 60, 80 oder 100 ist.

Besonders bevorzugte Diphenole sind z.B.:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan.

Es können auch beliebige Mischungen der vorgenannten Diphenole verwendet werden.

Unter den Bedingungen der Polycarbonatherstellung reaktive Kohlensäurederivate sind für das Phasengrenzflächenverfahren sowie für das Verfahren in homogenen Lösung Carbonylhalogenide sowie die Bishalagenformiate der einzusetzenden Diphenole. Phosgen sowie die Bischlorformiate sind bevorzugt, besonders bevorzugt ist Phosgen.

Für das Schmelzumesterungsverfahren reaktive Kohlensäurederivate sind Diarylcarbonate, insbesondere Diphenylcarbonat oder die Bis-arylcarbonate der einzusetzenden Diphenole; bevorzugt wird für das Schmelzumesterungsverfahren Diphenylcarbonat.

Die Menge an Kohlensäurederivate beträgt im Falle des Phasengrenzflächenverfahrens um das Verfahrens in homogener Lösung zwischen 1 Mol und 2 Mol, pro Mol Diphenol, wobei bei Einsatz von Bishalogenformiaten zwischen 0,5 Mol und 1 Mol pro Mol Diphenol eingesetzt wird.

Die Menge an Kohlensäurederivat beträgt im Falle des Schmelzumesterungsverfahrens zwischen 1,0 Mol und 2,5 Mol, pro Mol Diphenol, wobei bei Einsatz von Bisarylcarbonaten 1,0 Mol bis 1,5 Mol pro Mol Diphennol benötigt werden.

Erfindungsgemäß geeignete Verzweiger, also dreifunktionelle oder mehr als dreifunktionelle Verbindungen, wobei "funktionell" Reaktivität unter den Bedingungen der Polycarbonatherstellungsverfahren bedeutet, sind insbesondere solche mit drei oder mehr als drei phenolischen OH-Gruppen.

Einige der verwendeten Verbindungen mit drei oder mehr als drei phenolischen Hydroxylgruppen sind beispielsweise Phloroglucin, 4,6-Dimethyl-2,4,6-tri-(4-hydroxyphenyl)-hepten-2; 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5′-methyl-benzyl)-4-methylphenyl, 2-(4-Hydroxyphenyl)-2-(2,4-dihydroxyphenyl)-propan, Hexa-(4-(4-hydroxyphenylisopropyl)-phenyl)-ortho-terephthalsäureester, Tetra(4-hydroxyphenyl)- methan, Tetra-(4-(4-hydroxyphenyl-isopropyl)-phenoxy)-methan und 1,4-Bis-((4′,4″-dihydroxytriphenyl)-methyl)-benzol. Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo2,3-dihydroindol.

Die Reaktionsbedingungen für die erfindungsgemäß geeigneten Polycarbonatherstellungsvarianten, also Reaktionstemperaturen, Reaktionsdrucke, gegebenenfalls einzusetzende Lösungsmittel, geeignete Katalysatoren, Reaktionszeiten, einzuhaltende Konzentrationen der Reaktanten im gegebenenfalls einzusetzenden Lösungsmittel, Katalysatormengen, Art und Menge an basischen Verbindungen etc. sind bekannt und zu den bekannten Bedingungen anwendbar.

Die zu verwendenden Vorrichtungen, Reaktionsgefäße, Rührwerke etc. sind ebenfalls geläufig.

Die Herstellung der erfindungsgemäßen Polycarbonate erfolgt vorzugsweise nach dem Phasengrenzflächenverfahren (vgl. H. Schnell, "Chemistry and Physics of Polycarbonates; Polymer Reviews, Vol. IX, Seite 33 ff, Interscience Publ., (1964).

Hierbei wird im allgemeinen wie folgt verfahren: Die Diphenole, vorzugsweise die der Formel (II), werden in wäßriger alkalischer Phase gelöst. Dazu werden die zur Herstellung der erfindungsgemäßen Polycarbonate erforderlichen Kettenabbrecher der Formel (I) in Mengen von 0,5-10 Mol-%, vorzugsweise 2-7 Mol-%, bezogen auf die Mole Diphenole, zugegeben.

Dann wird nach Zugabe einer inerten, vorzugsweise Polycarbonat lösenden, organischen Phase bei Reaktionstemperaturen zwischen 0° und 40° C mit Phosgen nach der Methode der Phasengrenzflächenkondensation umgesetzt.

Dabei ist es notwendig, daß sich die mesogenen beziehungsweise thermotrop flüssigkristallinen Verbindungen der Formel (I) gut im wäßrigen alkalischen Medium lösen. Überraschenderweise zeigen die Verbindungen der Formel (I) eine vergleichbare Löslichkeit und Reaktivität wie die üblicherweise als Endgruppen verwendeten Phenole, wie z.B. Phenol, p-tert.-Butylphenol und p-Isooctylphenol. Das ist umso überraschender, weil Phenole der Formel (III)

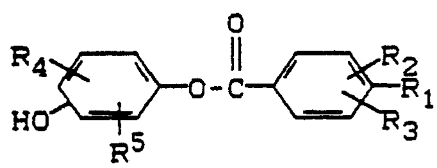

(III)

die sich von den erfindungsgemäß einzusetzenden mesogenen Phenolen der Formel (I) lediglich durch die Inversion der Estergruppe zwischen den aromatischen Ringen unterscheiden, nicht als Endverkappungsagenz zu terminierten Polycarbonaten führen. Daher sind Verbindungen der Formel (III) auch nicht als Molekulargewichtsregler einsetzbar.

Der gute Eignung der Verbindungen der Formel (I) als Kettenabbrecher für die Polycarbonatsynthese nach dem Phasengrenzflächenverfahren war daher nicht vorhersehbar.

Die gegebenenfalls mitzuverwendenden 0,05 bis 2 Mol-%, bezogen auf eingesetzte Diphenole, an Verzweigern können entweder mit den Diphenolen selbst und den Kettenabbrechern der Formel (I) in der wäßrig alkalischen Phase vorgelegt werden, oder in einem organischen Lösungsmittel gelöst vor der Phosgenierung zugegeben werden.

Anstelle der Diphenole können auch deren Mono- und/oder Bis-chlorkohlensäureester mitverwendet werden, wobei diese in organischen Lösungsmitteln gelöst zugegeben werden. Die Menge an Kettenabbrecher der Formel (I) sowie an Verzweiger richtet sich dann nach Molen an Diphenolat-Struktureinheiten, also bei Einsatz der Diphenole der Formel (II) nach den -O-Z-O- Struktureinheiten.

Auch kann bei Einsatz von Chlorkohlensäureestern die Phosgenmenge in bekannter Weise entsprechend reduziert werden.

Die erfindungsgemäß einzusetzenden Kettenabbrecher der Formel (I) können auch während der Phosgenierung in Lösung zugesetzt werden. Geeignete organische Lösungsmittel für die Lösung der Kettenabbrecher der Formel (I) sind beispielsweise Tetrahydrofuran, Dioxan, Pyridin, N,N-Dimethylformamid und Methylglykolacetat, insbesondere Tetrahydrofuran und die Chlorkohlensäureester sind beispielsweise Methylenchlorid, Chlorbenzol, Acetonitril sowie Mischungen dieser Lösungsmittel, insbesondere Mischungen aus Methylenchlorid und Chlorbenzol.

Als organische Phase für die Phasengrenzflächenpolykondensation dientg beispielsweise Methylenchlorid, Chlorbenzol sowie Mischungen aus Methylenchlorid und Chlorbenzol.

Die Herstellung der erfindungsgemäßen Polycarbonate nach dem Phasengrenzflächenverfahren kann in üblicher Weise durch Katalysatoren wie tertiäre Amine, insbesondere tertiäre aliphatische Amine wie

Tributylamin oder Triethylenamin katalysiert werden; die Katalysatoren können in Mengen von 0,05 bis 10 Mol-%, bezogen auf Mole an eingesetzten Diphenolen beziehungsweise bezogen auf Mole an Diphenolat-Struktureinheiten eingesetzt werden. Die Katalysatoren können vor Beginn der Phosgenierung oder während oder auch nach der Phosgenierung zugesetzt werden.

Die Isolierung der erfindungsgemäßen Polycarbonate erfolgt in bekannter Weise, beispielsweise durch Ausdampfen der abgetrennten und gewaschenen Lösung des Polycarbonats im organischen Lösungsmittel wie Ausdampfextruder und anschließender Extrusion und Granulierung des Polycarbonats in bekannter Weise.

Die erfindungsgemäßen Polycarbonate zeigen beispielsweise verglichen mit entsprechenden, aber mit Phenol, p-tert.-Butylphenol oder 4-Isooctylphenol terminierten Polycarbonaten eine deutlich verbessere Fließfähigkeit bei vergleichbarem mittleren Molekulargewicht.

Die erfindungsgemäßen Polycarbonate sind bei Temperaturen von 220 °C bis 320 °C in üblicher Weise thermoplastisch verarbeitbar. Durch Spritzguß oder via Extrusion können beliebige Formkörper und Folien in bekannter Weise herstellt werden.

Die erfindungsgemäßen Polycarbonate sind in Lösungsmitteln wie chlorierten Kohlenwasserstoffe z.B. Methylenchlorid gut löslich und können somit beispielsweise in bekannter Weise zu Gießfolien verarbeitet werden.

Den erfindungsgemäßen Polycarbonaten können die üblichen Additive wie Alterungsschutzmittel gegen UV-Einwirkung $O_2$-Einwirkung und Feuchtigkeitseinwirkung, Flammschutzmittel, Verarbeitungsmittel, wie Gleitmittel, Entformungsmittel und Weichmacher, und Füllstoffe in bekannter Weise zugesetzt werden.

Im einzelnen können beispielsweise den erfindungsgemäßen Polycarbonaten Ruß, Kieselgur, Kaolin, Tone, $CaF_2$, $CaCO_3$, Aluminiumoxide, Glasfasern oder anorganische Pigmente sowohl als Füllstoffe als auch als Nucleirungsmittel zugesetzt werden.

Geeignete Entformungsmittel sind beispielsweise Glyceintristearat, Trimethylolpropantriestearat, Pentaerythrit-Tetrastearat sowie die entsprechenden Palmitinsäureester oder Myristinsäureester eingesetzt werden.

in den nachfolgenden Beispielen ist $\eta_{rel}$ gemessen in $CH_2Cl_2$ bei 25 °C und bei einer Konzentration von 0,5 Gew.-%.

## Beispiel 1

4,56 kg 2,2-Bis-(4-hydroxyphenyl)-propan (Bisphenol A) gelöst in 8 kg 45 %iger Natronlauge und 40 kg Wasser werden mit 20 kg Methylenchlorid und 20 kg Chlorbenzol bei 20 °C vorgelegt. In die gerührte Mischung werden 166 g (= 3,4 Mol-%, bezogen auf Bisphenol A) (p-Methoxyphenyl)-4-hydroxybenzoat, gelöst in 600 ml Tetrahydrofuran, gegeben und anschließend bei pH 13-14 und 21-25 °C in 1 h 2,7 kg Phosgen eingeleitet. 28 ml N-Ethyl-piperidin werden danach hinzugegeben und noch 1 h gerührt.

Die bisphenolatfreie wäßrige Phase wird abgetrennt, die org. Phase nach Ansäuern mit Phosphorsäure mit Wasser neutral gewaschen und nach Abdestillieren des Methylenchlorids bei 280 °C extrudiert. Es wurden 3,9 g Produkt erhalten mit einer rel. Lösungsviskosität $\eta_{rel}$ = 1,287.

## Beispiel 2

Innerhalb von einer halben Stunde werden bei 20-25 °C unter Rühren 15 g (0,15 Mol) Phosgen in ein Gemisch aus 22,8 g (0,1 Mol) Bisphenol A, 20 g (0,5 Mol) Natriumhydroxid, 400 ml dest. Wasser, 400 ml Methylenchlorid und 871 mg (= 3 Mol-%, bezogen auf Bisphenol A) Bisphenyl-4-hydroxybenzoat eingeleitet. Nach Zugabe von 0,14 ml N-Ethylpiperidin wird noch 1/2 h lang nachgerührt. Die org. Phase wird mit Phosphorsäure angesäuert, mit Wasser elektrolytfrei gewaschen, getrocknet und eingeengt. Es wurden 25,3 g Produkt erhalten mit einer Lösungsviskosität $\eta_{rel}$ = 1,290.

## Beispiel 3-9

Wie in Beispiel 2 beschrieben, wurde ein Polycarbonat mit jeweils 3 Mol-% an folgenden Kettenabbrechern hergestellt.

| Bsp. | Kettenabbrecher | mg | $\eta_{rel}$ |
|---|---|---|---|
| 3 | Phenyl-4-hydroxybenzoat | 643 | 1,332 |
| 4 | (4-Methylphenyl)-4-hydroxybenzoat | 685 | 1,335 |
| 5 | (4-Cyclohexylphenyl)-4-hydroxy-benzoat | 889 | 1,329 |
| 6 | (4-Nitrophenyl)-4-hydroxybenzoat | 777 | 1,311 |
| 7 | (4-Acetylphenyl)-4-hydroxybenzoat | 997 | 1,321 |

Vergleichsversuche A-D

Wie in Beispiel 2 beschrieben, wurden Polycarbonate mit 3 Mol-% an folgenden Kettenabbrechern hergestellt:

| Vgl. Bsp. | Kettenabbrecher | $\eta_{rel}$ |
|---|---|---|
| A | p-tert.-Butylphenol | 1,280 |
| B | Phenol | 1,292 |
| C | p-iso-Octylphenol | 1,285 |
| D | (4-Hydroxyphenyl)-4-methoxybenzoat | 1,827 |

Die durch Gelpermeationschromatographie nach vorhergehender Eichung ermittelten mittleren Molekulargewichte (Mn) sowie die mit einem Contraves-Rheomat 30 bestimmten Schmelzviskositäten ($\eta_{melt}$) bei 320°C und einer Schubspannung $\tau$ = $10^3$ Pa sind der Tabelle 1 für die Beispiele 1-7 und die Vergleichsversuche A-D zu entnehmen.

| Beispiel | Mn (kg/Mol) | $\eta_{melt}$ (Pa.s) | $\eta_{rel}$ |
|---|---|---|---|
| 1 | 13,2 | 199 | 1,304 |
| 2 | 14,6 | 414 | 1,290 |
| 3 | 16,0 | 8,4 | 1,332 |
| 4 | 13,8 | 74,0 | 1,335 |
| 5 | 13,5 | 86,0 | 1,329 |
| 6 | 14,5 | 35,0 | 1,311 |
| 7 | 14,2 | 122,0 | 1,321 |
| A | 13,7 | 343,0 | 1,280 |
| B | 14,0 | 357,0 | 1,290 |
| C | 14,2 | 321,0 | 1,285 |
| D | 43,0 | 623,5 | 1,827 |

**Ansprüche**

1. Thermoplastische, aromatische Polycarbonate mit mittleren Molekulargewichten Mn (Zahlenmittel, ermittelt duch Gelchromatographie nach vorheriger Eichung) von mindestens 5000 g/Mol, auf Basis von Diphenoln, Kettenabbrechern und gegebenenfalls Verzweigern, die dadurch gekennzeichnet sind, daß als Kettenabbrecher mesogene Verbindungen der Formel (I) eingebaut sind,

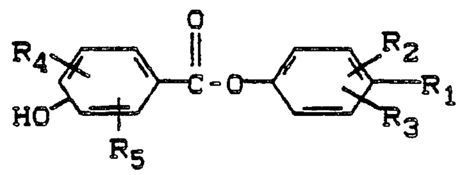

(I)

worin

$R_1$, $R_2$, $R_3$, $R_4$ und $R_5$ gleich oder verschieden sind und Wasserstoff, $C_1$-$C_{12}$-Alkyl, $C_1$-$C_{12}$-Alkyloxy, $C_3$-$C_{10}$-Cycloalkyl-, $C_3$-$C_{10}$-Cycloalkyloxy-, $C_6$-$C_{20}$-Aryl, $C_6$-$C_{20}$-Aryloxy, $C_7$-$C_{20}$-Aralkyl-, $C_7$-$C_{20}$-Aralkyloxy, Trifluormethyl, Trifluormethoxy, Chlor, Brom, Iod oder Nitro sind, wobei $R_2$, $R_3$, $R_4$ und $R_5$ vorzugsweise Wasserstoff sind.

2. Polycarbonate gemäß Ansprüchen 1 bis 3 mit mittleren Molekulargewichten ( $\overline{M}n$) von 7500 g/Mol bis 100.000 g/Mol.

3. Verwendung der mesogenen Verbindungen der Formel (I) des Anspruchs 1 als Kettenabbrecher zur Herstellung von thermoplastischen, aromatischen Polycarbonaten.

4. Verfahren zur Herstellung der thermoplastischen aromatischen Polycarbonate des Anspruchs 1 nach dem bekannten Zweiphasengrenzflächenverfahren, nach dem bekannten Verfahren in homogener Lösung oder nach dem bekannten Schmelzumesterungsverfahren durch Umsetzung von unter den Bedingungen dieser Polycarbonatsynthesen reaktiven Kohlensäurederivaten mit Diphenolen, Kettenabbrechern und gegebenenfalls mit Verzweigern, dadurch gekennzeichnet, daß man als Kettenabbrecher mesogene Verbindungen der Formel (I) des Anspruchs 1 einsetzt.

5. Thermoplastische, aromatische Polycarbonate, erhältlich gemäß Verfahren des Anspruchs 4.

6. Verwendung der Polycarbonate der Ansprüche 1, 2 und 5 zur Herstellung von Formkörpern für optische Zwecke.

7. Verwendung gemäß Anspruch 6 zur Herstellung von Datenspeichern und Audio-Compact-Discs.